# EUROPEAN PATENT SPECIFICATION

(11) **EP 4 415 185 B1**
(45) Date of publication and mention of the grant of the patent: **11.03.2026**
(21) Application number: 22889324.4
(22) Date of filing: 02.11.2022
(51) Int. Cl.: H01R 13/6591, H01R 13/6581, H01R 13/40, H01R 4/56

(54) **CHARGING CONNECTOR**
LADESTECKER
CONNECTEUR DE CHARGE

(30) Priority: 05.11.2021 CN 202122696738 U
(43) Date of publication of application: 14.08.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Elkington and Fife LLP
(86) International application number: PCT/CN2022/129286
(87) International publication number: WO 2023/078302

(56) References cited:
- CN-A- 106 374 282
- CN-A- 110 416 830
- CN-A- 110 416 830
- CN-U- 206 332 216
- CN-U- 207 490 169
- CN-U- 207 490 169
- CN-U- 207 611 940
- CN-U- 208 889 901
- CN-U- 216 085 570
- US-A1- 2016 218 470

## Description

### RELATED APPLICATIONS

The present disclosure claims priority to Chinese Patent Application 202122696738.4, filed on November 5, 2021.

### FIELD OF TECHNOLOGY

The present disclosure relates to the field of new energy vehicle charging technologies, and in particular to a charging connector.

### BACKGROUND

Currently, new energy vehicles are widely used, and they rely on charging systems to replenish energy. The charging system includes various connection mechanisms connected to a charging socket and a charging gun system. Charging terminals and charging harnesses are important parts of the electric vehicle charging socket system. Currently, copper wires, which are used as charging wires in the charging socket, are connected to the charging terminals and then electrically connected to the battery system. In the prior art, the charging socket is directly connected to the harness without an intermediate adapter mechanism, which does not allow for a quick plug function and fast replacement of the harness. Additionally, the copper wire is connected to the charging terminal only at a 180° angle, making mounting difficult and leading to an overall excessive height of the charging socket. This affects the mounting of the vehicle body.

Furthermore, conductive cables and data communication cables are respectively used to conduct electricity and signals. To reduce the impact of electromagnetic interference, shield cables are typically used as the conductive cables and data communication cables. At both ends of the cable, a shield layer of the shield cable is connected to a shield apparatus and is grounded. The shield cable typically includes a conductor core and a shield layer arranged sequentially from the inside to outside. To facilitate connection with a mating cable or an electric device, an end portion of the cable is typically connected to a connector. Generally, the connector lacks a shield apparatus for shielding, resulting in significant electromagnetic interference at its own position. Setting a metal shield inside or outside the connector can provide a shield effect. However, metal shield processing is difficult and costly; assembly of the metal shield with the connector is also laborious, increasing assembly time; and when the metal shield is placed inside the connector, it is easily to short-circuiting with the conductor core, leading to damage to the shield layer or even burning of the cable, and resulting in a serious accident. Therefore, a new solution is needed urgently to address the foregoing problems in the prior art. A high-voltage shielding electric connector assembly convenient to install is known from the prior art, for example from CN106374282A. A 90 degrees on-vehicle quick charge seat of high pressure is known from the prior art, for example from CN207490169U.

It should be noted that the introduction to the background above is only provided to facilitate a clear and comprehensive explanation of the technical solutions in the present disclosure and to facilitate understanding of those of ordinary skill in the art in this field. Description of these solutions in the background of the present disclosure does not imply that the technical solutions are common knowledge among those of ordinary skill in the art.

### SUMMARY

To resolve at least one problem mentioned in the background, the embodiments of the present disclosure provide a charging connector. The invention is set out in the appended set of claims. Any references to inventions or embodiments not falling within the scope of the independent claims are to be interpreted as examples useful for understanding the invention.

The embodiments of the present disclosure provide a charging connector, including a charging socket body; multiple terminals disposed in the charging socket body; a hollow housing connected to the charging socket body; and multiple cables running in the housing. An end portion of each cable is detachably connected to a corresponding terminal by a terminal connector.

The embodiments of the present disclosure at least include beneficial effects as follows:
1. Each cable in the embodiments of the present disclosure is detachably connected to the corresponding terminal by the terminal connector, and the terminal connector serves as an intermediate adapter mechanism to connect the terminal to the cable, facilitating disassembly and assembly of the terminals and cables, and fast replacement of the cables.
**2. In** the embodiments of the present disclosure, the arrangement of a shield shell can effectively shield electromagnetic radiation in the shield shell, reducing electromagnetic interference with other electrical elements, thereby improving the safety of the vehicle.
3. In the embodiments of the present disclosure, the charging socket body is detachably connected to the housing, which facilitates disassembly and assembly, and replacement of the internal cables or the charging socket body.
4. In the embodiments of the present disclosure, the arrangement of a snap ring allows for fixed snap-fitting between the charging socket body and the housing, providing a secondary locking function, thus improving the reliability of connection between the charging socket body and the housing.
5. In the embodiments of the present disclosure, the connection at 90° between the charging socket body and the housing reduces the height of the entire charging socket, facilitating mounting and wire layout of the vehicle.

Referring to the descriptions and accompanying drawings below, specific implementations of the present disclosure are disclosed in detail, indicating the ways in which the principles of the present disclosure can be implemented.

### BRIEF DESCRIPTION OF THE DRAWINGS

The included drawings are provided for further understanding of the embodiments of the present disclosure. They constitute a part of the specification, serving to illustrate the implementations of the present disclosure and to elucidate the principles of the present disclosure based on written description. Apparently, the accompanying drawings in the following description show merely some embodiments of the present disclosure, and those of ordinary skill in the art may still derive other drawings from these accompanying drawings without creative efforts. **In** the accompanying drawings:
FIG. 1 is a schematic diagram of an exemplary three-dimensional structure of a charging connector according to an embodiment of the present disclosure.
FIG. 2 is an exemplary cross-sectional view of a charging connector according to an embodiment of the present disclosure.
FIG. 3 is a schematic connection diagram between multiple cables and multiple terminals according to an embodiment of the present disclosure.
FIG. 4 is a schematic structural diagram of multiple cables penetrating through an end cover and a sealing pad according to an embodiment of the present disclosure.
FIG. 5 is a schematic connection diagram between a charging socket body and a housing according to an embodiment of the present disclosure.
FIG. 6 is an exemplary schematic structural diagram of a terminal connector according to an embodiment of the present disclosure.
FIG. 7 is an exemplary schematic structural diagram of a shield shell according to an embodiment of the present disclosure.
FIG. 8 is an exemplary schematic structural diagram of a snap ring according to an embodiment of the present disclosure.

### DESCRIPTION OF THE EMBODIMENTS

With reference to the drawings and the following specification, the foregoing description and other features of the present disclosure become apparent. The specification and drawings specifically disclose specific implementations of the present disclosure, indicating some of implementations where the principles of the present disclosure can be implemented. It should be understood that the present disclosure is not limited to the described implementations; instead, it includes all modifications, variations, and equivalents falling within the scope of the appended claims.

In the embodiments of the present disclosure, terms such as "first" and "second" are used to distinguish between different elements from a nominal standpoint, but they do not necessarily imply spatial arrangement or chronological sequence of those elements. These elements should not be limited by these terms. The term "and/or" includes any one or more of the terms listed in association, and all combinations thereof. The terms such as "comprise", "include", and "have" indicate the presence of the stated features, elements, parts, or components, but do not exclude the presence or addition of one or more other features, elements, parts, or components.

In the embodiments of the present disclosure, singular forms such as "one" and "the" may include plural forms and are not limited to the meaning of "one", but should be broadly interpreted as "one type" or "one kind". The term "the" should be understood to include both singular and plural forms unless the context explicitly indicates otherwise. The term "according to" should be understood as "at least partially according to" and the term "based on" should be understood as "at least partially based on" unless the context explicitly indicates otherwise. The term "multiple" means two or more unless otherwise specified.

The following describes the implementations of the embodiments of the present disclosure with reference to the accompanying drawings.

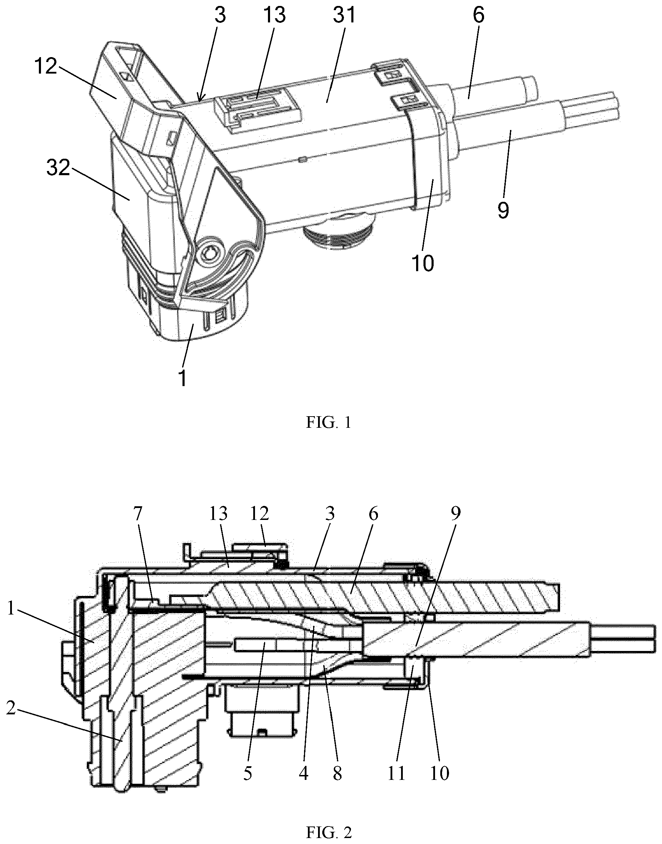

The embodiments of the present disclosure provide a charging connector. FIG. 1 is a schematic diagram of an exemplary three-dimensional structure of a charging connector according to an embodiment of the present disclosure, and FIG. 2 is an exemplary cross-sectional view of a charging connector according to an embodiment of the present disclosure.

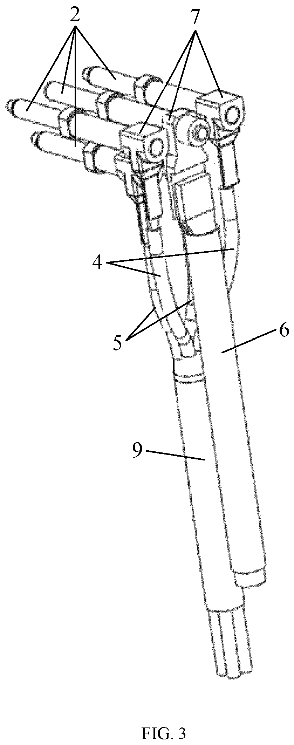

As shown in FIGs. 1 and 2, the charging connector of the embodiments of the present disclosure includes a charging socket body 1, multiple terminals 2, a hollow housing 3, and multiple cables. The multiple terminals 2 are disposed in the charging socket body 1, and the housing 3 is connected to the charging socket body 1. For example, the multiple cables include two charging wires 4, two data wires 5, and one ground wire 6 in FIG. 3. The multiple cables run in the housing 3, and an end portion of each cable is detachably connected to a corresponding terminal 2 by a terminal connector 7. The terminal connector 7 serves as an intermediate adapter mechanism to connect the terminal 2 to the cable, facilitating disassembly and assembly of the terminals 2 and cables, and fast replacement of the cables.

As shown in FIGs. 3, 4, and 6, in some embodiments, the terminal connector 7 may include a connecting head 701 and a connecting rod 702 that are connected to each other, the connecting rod 702 is welded or crimped to a conductor of the cable, and the connecting head 701 is threadedly connected to the terminal 2. This facilitates fast replacement of the cables and disassembly and assembly.

Welding methods may include one or more of pressure welding, friction welding, resistance welding, ultrasonic welding, laser welding, diffusion welding, and electromagnetic welding.

The pressure welding means pressure is applied to members to be welded, enabling joint surfaces to be in tight contact and undergo some plastic deformation, thus completing welding.

The friction welding means a heat energy generated by friction at the contact surfaces of workpieces is used as a heat source, causing the workpieces to undergo plastic deformation under pressure for welding.

The resistance welding means a powerful electric current is enabled to pass through a contact point between an electrode and a workpiece, generating a heat energy due to contact resistance for welding.

The ultrasonic welding means a high-frequency vibration wave is transmitted to surfaces of two objects to be welded, and under pressure, the surfaces of the two objects rub against each other to cause fusion between the molecular layers.

The laser welding means a laser beam with a high energy is used as a heat source for efficient and precise welding.

The diffusion welding is solid-state welding where workpieces are pressurized at a high temperature without causing visible deformation or relative movement.

The electromagnetic welding means two workpieces to be welded undergo instant high-speed collision under action of a strong pulse magnetic field. In the surface layers of the materials, action of a quite high-pressure wave causes the atoms of the two materials to meet within atomic distances, thereby forming a stable metallurgical bond at an interface. This is one type of solid-state welding, allowing conductive metals with similar or dissimilar properties to be welded together.

**In** some embodiments, a torque range for the threaded connection between the connecting head 701 and the terminal 2 is 0.1 N·m-30 N·m.

**In** order to verify the influence of the torque range for the threaded connection between the connecting head 701 and the terminal 2 on the electrical connectivity performance between the terminal 2 and the terminal connector 7, the inventor selects the same terminals 2 and terminal connectors 7, uses different torques to twist them together, and respectively tests contact resistances between the terminals 2 and the terminal connectors 7 as well as the connection situations between the connecting head 701 and the terminals 2 after vibration test. The test results are shown in Table 1.

The method for testing the contact resistance between the terminal 2 and the terminal connector 7 is to use a micro-ohmmeter, place an end of the test end of the micro-ohmmeter on terminal connector 7 and the other end on the terminal 2, with a same placement position for testing each time, and read the contact resistance on the micro-ohmmeter. In this embodiment, a contact resistance greater than 1 mQ is considered unqualified.

The vibration test: The connected sample pieces are placed on a vibration test platform and subjected to vibration cycle for 300 times, where each cycle requires vibrations in six directions at a frequency of 100 Hz, with a unidirectional acceleration of 40m/s², and then whether the connecting head 701 and the terminal 2 are loosened is observed. In this embodiment, a connecting head 701 and a terminal 2 loosened or damaged during mounting are considered unqualified.

**Table 1: Effects of different torques on contact resistance and connection situation**

| Torque for threaded connection between connecting head and terminal (N·m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| Contact resistance between terminal and terminal connector (mQ) | | | | | | | | | | | | | |
|---|---|---|---|---|---|---|---|---|---|---|---|---|---|
| 1.16 | 1.04 | 0.98 | 0.94 | 0.91 | 0.88 | 0.85 | 0.83 | 0.80 | 0.76 | 0.74 | 0.75 | 0.75 | 0.75 |

| Connection situation between connecting head and terminal | | | | | | | | | | | | | |
|---|---|---|---|---|---|---|---|---|---|---|---|---|---|
| Loose | Loose | Tight | Tight | Tight | Tight | Tight | Tight | Tight | Tight | Tight | Tight | Tight | Tight |

It can be seen from Table 1 above that when the torque of threaded connection between the connecting head 701 and the terminal 2 is less than 0.1 N·m, the contact resistance between the terminal 2 and the terminal connector 7 is considered unqualified, and the connecting head 701 and the terminal 2 are loosened after vibration test. Therefore, the inventor defines the minimal value of the torque range for threaded connection between the connecting head 701 and the terminal 2 as 0.1 N·m. When the torque of threaded connection between the connecting head 701 and the terminal 2 is greater than 30 N·m, the contact resistance cannot be further reduced. Therefore, the inventor defines the torque range for threaded connection between the connecting head 701 and the terminal 2 as 0.1 N·m-30 N·m.

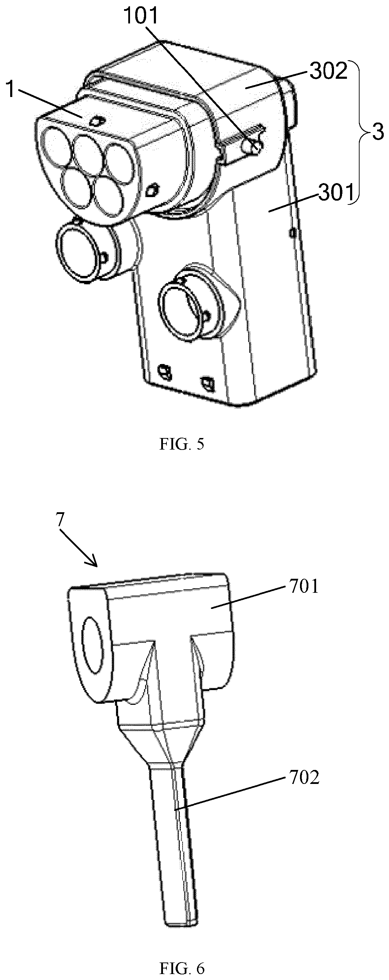

As shown in FIGs. 1 and 5, in some embodiments, the charging socket body 1 may be perpendicular to the housing 3, and the terminal 2 may be perpendicular to a front end of the cable. When the charging socket body 1 and the vehicle housing are mounted, the charging socket body 1 needs to be fixed to the vehicle body, and the cable connected to the housing 3 is arranged in the vehicle body. Due to the limited space in the vehicle body, if the entire lengths of the charging socket body 1, the housing 3, and the cable are large, they occupy the space of other parts of the vehicle body, which is not conducive to reasonable layout of the space of the vehicle body. Thus, the charging socket body 1 being perpendicular to the housing 3 allows the housing 3 and the cable to be arranged along the interior of the vehicle, reducing the height of the charging connector without occupying the mounting space of other electrical components.

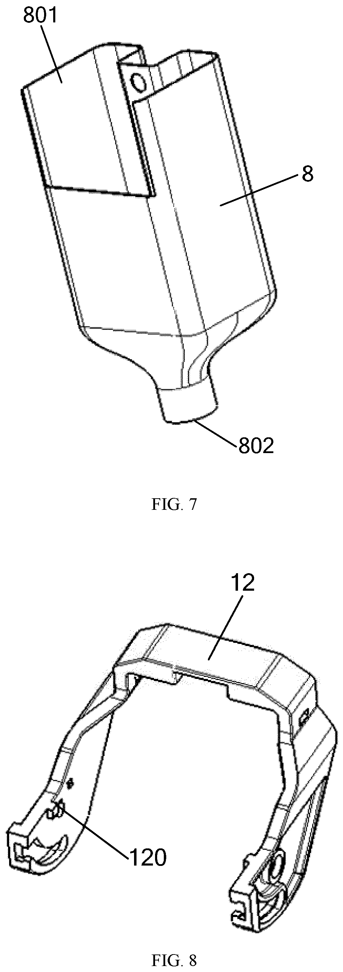

As shown in FIGs. 2 and 7, in some embodiments, the charging connector may further include a shield shell 8 disposed in the housing 3, and at least one cable runs through the shield shell 8. The multiple cables include high-voltage cables and data communication cables, and the high-voltage cables and data communication cables are respectively used to conduct electricity and signals. Generally, the high-voltage cables all radiate electromagnetic waves outward, which can interfere with the signal transmission of other electrical components and the data communication cables. In addition, other electrical components on the vehicle body also emit electromagnetic waves, which also interfere the signal transmission of the data communication cables. To reduce the impact of electromagnetic interference, shield cables are typically used as the high-voltage cables and data communication cables. At both ends of the cable, a shield layer of the shield cable is connected to a shield apparatus and is grounded. The shield cable typically includes a conductor core and a shield layer arranged sequentially from the inside to the outside. To facilitate connection with a mating cable or an electric device, an end portion of the cable is typically connected to a connector. Generally, the connector lacks a shield apparatus for shielding, resulting in significant electromagnetic interference at its own position. Arranging a shield shell 8 in the charging connector can effectively shield electromagnetic interference inside the shield shell 8 or outside the shield shell 8, reducing electromagnetic interference with other electrical elements and the signal of the data communication cables, thereby improving the safety of the vehicle.

Further, as shown in FIG. 7, the shield shell 8 includes a first port 801 and a second port 802, the at least one of the cables runs through the shield shell 8 by the first port 801 and the second port 802, the first port 801 is sealingly joined with the charging socket body 1, and the second port 802 is sealingly joined with the cable running through the shield shell 8, such that the interior of the shield shell 8 is in a sealed state, which significantly reduces electromagnetic interference entering from a gap, thus achieving a good shield effect.

In some embodiments, the cables are provided with a shield mesh, and the shield mesh is electrically connected to the shield shell 8. The shield mesh being electrically connected to the shield shell 8 may reduce shield blind spots, allowing for a larger shield range and a better shield effect. In addition, the other end of the shield mesh of the cable is grounded, so as to lead out an eddy current generated due to electromagnetic interference in the shield shell 8 and the shield mesh, thus avoiding reducing the shield effect.

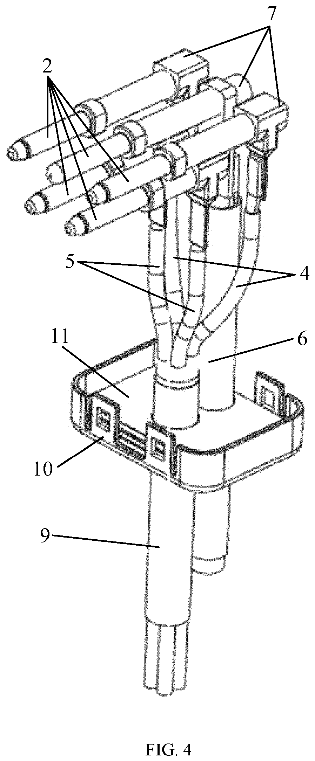

Further, as shown in FIGs. 3 and 4, the multiple cables may include a charging wire 4 and a data wire 5, the charging wire 4 and the data wire 5 run through the shield shell 8, and the charging wire 4 and the data wire 5 are sealingly joined with the second port 802 via an insulator 9. In an example in FIG. 2, the insulator 9 extends by a preset length towards the outside of the shield shell 8 from the second port 802. Because the shield mesh needs to be peeled off after the charging wire 4 and the data wire 5 enter the charging connector, the charging wire 4 and the data wire 5 in the charging connector without shield protection may influenced by electromagnetic interference. As the charging wire 4 and the data wire 5 run through the shield shell 8, shield protection can be provided for the charging wire 4 and the data wire 5, avoiding the impact of the electromagnetic interference.

Further, as shown in FIGs. 3 and 4, the plurality of cables may include a ground wire 6, and the ground wire 6 is located outside the shield shell 8. In an example in FIG. 2, the ground wire 6 is located on a side of the shield shell 8, the ground wire 6 may attach to an outer side wall of the shield shell 8 to extend or be spaced apart from the outer side wall of the shield shell 8, and the other end of the ground wire 6 is grounded, causing no electromagnetic interference. The ground wire 6 does not transmit signals and thus is neither prone to interference, so the ground wire 6 may be disposed outside the shield shell 8, reducing the volume of the shield shell 8 and optimizing the layout of the cables in the overall charging connector.

Further, as shown in FIGs. 2 and 4, the housing 3 has a first end and a second end that are opposite each other, the first end of the housing 3 is connected to the charging socket body 1, the second end of the housing 3 is connected to an end cover 10, the end cover 10 and the housing 3 are sealed using a sealing pad 11, the insulator 9 runs through the sealing pad 11 and the end cover 10 and is sealingly joined with the sealing pad 11, the ground wire 6 runs through the sealing pad 11 and the end cover 10 and is sealingly joined with the sealing pad 11. Therefore, the interior of the housing 3 is in a sealed state, resulting in a better waterproof effect.

For example, as shown in FIG. 4, the sealing pad 11 and the end surface of the end cover 10 are consistent in shape, the sealing pad 11 is embedded and fixed in the end cover 10 and tightly attached to the end surface of the end cover 10, and the sealing pad 11 and the end cover 10 are respectively provided with two through holes for the ground wire 6 and the insulator 9 to pass through respectively.

Further, the material of the shield shell 8 contains one or more of a conductive ceramic, a carbon-containing conductor, a solid electrolyte, a mixed conductor, and a conductive polymer material.

To verify effects of different materials on the conductivity of the shield shell 8, the inventor uses materials in the same size, with different substances to manufacture sample pieces of the shield shell 8, and respectively tests the conductivities of the shield shells 8. The test results are as shown in Table 2 below, and in this embodiment, a conductivity of the shield shell 8 greater than 99% is considered as an ideal value.

**Table 2: Effects of different materials on conductivity of the shield shell 8**

| Conductive ceramic | Carbon-containing conductor | Solid electrolyte | Mixed conductor | Conductive polymer material |
|---|---|---|---|---|
| 99.5% | 99.6% | 99.5% | 99.3% | 99.6% |

It can be seen from Table 2 above that the shield shells 8 made of the foregoing selected materials have conductivities in an ideal range. Therefore, the inventor arranges the material of the shield shell 8 to be one or more of the conductive ceramic, the carbon-containing conductor, the solid electrolyte, the mixed conductor, and the conductive polymer material.

Further, a carbon-containing conductor includes one or more of graphite powder, a carbon nanotube material, and a graphene material.

Further, the conductive polymer material is a polymer containing metal particles, and a material of the metal particles includes one or more of nickel, cadmium, zirconium, chromium, cobalt, manganese, aluminum, tin, titanium, zinc, copper, silver, gold, phosphorus, tellurium, and beryllium. A substance of the polymer material is one or more of polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyethylene terephthalate, polyurethane elastomer, styrene block copolymer, perfluoroalkoxy alkane, chlorinated polyethylene, polyphenylene sulfide, polystyrene, silicone rubber, cross-linked polyolefin, ethylene-propylene rubber, ethylene/vinyl acetate copolymer, chloroprene rubber, natural rubber, styrene-butadiene rubber, butyronitrile rubber, butadiene rubber, isoprene rubber, ethylene-propylene rubber, butyl rubber, fluoro rubber, polyurethane rubber, polyacrylate rubber, chlorosulfonated polyethylene rubber, epichlorohydrin rubber, chlorinated sulfur rubber, styrene butadiene rubber, butadiene rubber, hydrogenated nitrile rubber, polysulfide rubber, polysulfide rubber, crosslinked polyethylene, polycarbonate, polysulfone, polyphenylether, polyester, phenol formaldehyde resin, ureaformaldehyde, acrylonitrile-styrene copolymer, polymethacrylate, and polyoxymethylene resin.

The following exemplarily describes the features of the material.

Polyoxymethylene is a smooth, glossy, hard, and dense material, which is light yellow or white and can be used for long periods within a temperature range of -40°C to 100°C. Its abrasion resistance and self-lubricating properties are superior to those of most engineering plastics, and it also has excellent resistance to oil and peroxide.

Polycarbonate is transparent, heat-resistant, impact-resistant, and flame-retardant to **BI** level, and exhibits good mechanical properties within ordinary temperatures for use. Compared to methyl methacrylate with similar performance, polycarbonate has better impact resistance, higher refractive index, and better processing performance, and possesses good flame retardancy without the need for additives.

Polyamide, which is non-toxic and lightweight and has good mechanical strength and good wear and corrosion resistance, can replace metals such as copper in the manufacturing of bearings, gears, pump blades, and other components in industries such as machinery, chemicals, instrumentation, and vehicles. Polycarbonate or polyamide is the primary choice for the conductive polymer material.

**In** an implementation, the shield shell 8 is formed through one or more of an extrusion process, an injection molding process, a dip coating process, a blow molding process, a foaming process, a spraying process, a printing process, and a 3D printing process.

The injection molding process is a process of molding a semi-finished product with a specific shape through operations of, for example, pressurizing, injecting, cooling, and demolding a molten raw material.

The dip coating process is a process of heating the workpiece with electricity to a certain temperature and dipping it into a dip coating solution, allowing the coating solution to solidify on the workpiece.

The blow molding process involves extruding a tubular-shaped blank using an extruder, placing the blank into a mold as it is still hot, and inflating the blank with compressed air to be in a shape of a mold cavity, and cooling the blank for shaping to obtain a product. The blow molding process is suitable for various plastics and production of large products, and has high production efficiency, relatively uniform mold temperature, and lower equipment investment, and other advantages.

The foaming process involves adding a physical foaming agent or a chemical foaming agent for reaction during foam molding or foaming of a polymer material to form a honeycomb-shaped or porous structure. The basic steps of the foam molding include nucleation, nucleation growth or expansion, and nucleation stabilization. Under given temperature and pressure conditions, the solubility of a gas decreases, so as to reach saturation, causing release of excess gas and bubble formation, thus achieving nucleation.

The spraying process is a coating method of using a spray gun or disc atomizer to disperse, under pressure or a centrifugal force, a spray material into uniform and fine droplets, which are applied onto a surface of an object under coating. The spraying processes can be divided into air spraying, airless spraying, electrostatic spraying, and various derivatives of these basic spraying.

The printing process is a method of using a printing plate to transfer an ink or another viscous fluid material onto the surface of an object under coating, and includes screen printing, anastatic printing, flexographic printing, gravure printing, or offset printing.

The 3D printing process, also known as additive manufacturing, is a type of rapid prototyping technology. This technology, based on a digital model file, prints a material layer by layer such as powdered metal or plastic that can be bonded together, to construct an object.

**In** some embodiments, the plurality of terminals 2 may include a plug terminal and a ground terminal. The plug terminal is electrically connected to both a charging wire 4 and a data wire 5, and the ground terminal is electrically connected to the ground wire 6.

**In** an implementation, a material of the terminal 2 contains one or more of nickel, cadmium, zirconium, chromium, cobalt, manganese, aluminum, tin, titanium, zinc, copper, silver, gold, phosphorus, tellurium, and beryllium.

To verify effects of different materials on conductivity of the terminal 2, the inventor uses materials in the same size, with different substances to manufacture sample pieces of the terminal 2, and respectively tests the conductivities of the terminals 2. The test results are shown in Table 3. In this embodiment, a conductivity of the terminal 2 greater than 99% is considered as an ideal value.

**Table 3: Effects of different substances on conductivity of the terminal 2**

| Terminals made of different substances | | | | | | | | | | | | | | |
|---|---|---|---|---|---|---|---|---|---|---|---|---|---|---|
| Nickel | Cadmium | Zirconium | Chromium | Cobalt | Manganese | Aluminum | Tin | Titanium | Zinc | Copper | Silver | Gold | Tellurium | Beryllium |

| Conductivity of terminal (%) | | | | | | | | | | | | | | |
|---|---|---|---|---|---|---|---|---|---|---|---|---|---|---|
| 99.4 | 99.3 | 99.2 | 99.2 | 99.2 | 99.3 | 99.6 | 99.5 | 99.4 | 99.3 | 99.7 | 99.9 | 99.7 | 99.4 | 99.3 |

It can be seen from Table 3 that the terminals 2 made of the foregoing selected metal substances have conductivities in an ideal range. Phosphorus is a non-metallic material and cannot be used directly as the material of a metal insert. However, it can be added to other metals to form alloys, improving the electric conduction and mechanical performance of the metals themselves. Therefore, the inventor arranges the substance of the terminal 2 to contain one or more of nickel, cadmium, zirconium, chromium, cobalt, manganese, aluminum, tin, titanium, zinc, copper, silver, gold, phosphorus, tellurium, and beryllium.

**In** some embodiments, the charging socket body 1 is detachably connected to the housing 3, facilitating disassembly and assembly and replacement of the internal cables.

Further, the charging socket body 1 may be detachably inserted into the housing 3. Specifically, for example, as shown in FIG. 5, the housing 3 includes an accommodating shell 301 and an insertion shell 302. Multiple cables run in the accommodating shell 301 and the shield shell 8 is also disposed in the accommodating shell 301. The insertion shell 302 is disposed at an end of the accommodating shell 301 and perpendicular to the accommodating shell 301, the insertion shell 302 and the accommodating shell 301 are interconnected, and part of the charging socket body 1 is inserted into the insertion shell 302, thus achieving insertion of the charging socket body 1 into the housing 3.

**In** a first feasible technical solution, the contact surfaces of the charging socket body 1 and the housing 3 are adhesive layers through which the charging socket body 1 is adhered to the housing 3.

**In** a second feasible technical solution, the contact surfaces of the charging socket body 1 and the housing 3 are magnetic components, and the two are connected though the magnetic force between the magnetic components, allowing for convenient and quick connection.

**In** a third feasible technical solution, of the contact surfaces of the charging socket body 1 and the housing 3, one is provided with a claw, and the other is provided with a slot. Through the assembly of the claw and the slot, the charging socket body 1 is stably connected to the housing 3.

**In** a fourth feasible technical solution, of the contact surfaces of the charging socket body 1 and the housing 3, one is provided with a latch, and the other is provided with a clasp. Through the assembly of the latch and the clasp, the charging socket body 1 is stably connected to the housing 3.

**In** a fifth feasible technical solution, the charging socket body 1 and the housing 3 are respectively provided with a thread and a screw. Through threaded connection between the thread and the screw, the contact surfaces of the charging socket body 1 and the housing 3 are connected stably.

In a sixth feasible technical solution, the charging socket body 1 and the housing 3 are both provided with a connection hole, and a rivet is used with an end passing through the connection holes and then deformed, tightening the connection holes, such that the charging socket body 1 and the housing 3 are connected stably.

In a seventh feasible technical solution, in addition to the contact surfaces, the charging socket body 1 and the housing 3 further have welding surfaces. A welder is used to melt the welding surfaces for connection, thus allowing the contact surfaces of the charging socket body 1 and the housing 3 to be connected stably. The welders include a hot melting welder and an ultrasonic welder.

Further, as shown in FIGs. 1 and 8, the charging connector may further include a snap ring 12. The snap ring 12 has two opposite ends, and the two ends of the snap ring 12 are both rotatably connected to the charging socket body 1. An outer wall of the housing 3 is provided with a snap block 13, and the snap ring 12 is rotated to be tightly snap-fitted with or detached from the snap block 13, thus allowing for fixed snap-fitting between the charging socket body 1 and the housing 3, providing a secondary locking function. This improves the reliability of connection between the charging socket body 1 and the housing 3. Thereby, simple operation results in more convenient disassembly and assembly of the charging socket body 1 and the housing 3.

Specifically, for example, as shown in FIGs. 1 and 8, inner sides of two ends of the snap ring 12 are provided with pivot holes 120, and two opposite outer side walls of the charging socket body 1 are both provided with pivots 101. The snap ring 12 is sleeved outside the charging socket body 1, and the pivots 101 are inserted into the pivot holes 120, such that the snap ring 12 is rotatably connected to the charging socket body 1, allowing for a simple structure.

The above describes the present disclosure with reference to specific implementations. However, those of ordinary skill should understand that these descriptions are exemplary and do not limit the scope of protection of the present invention defined by the claims.

## Claims

1. A charging connector, comprising:
a charging socket body (1);
multiple terminals (2) disposed in the charging socket body (1);
a hollow housing (3) connected to the charging socket body (1); and
multiple cables running in the housing (3), an end portion of each of the cables is detachably connected to a corresponding terminal (2) by a terminal connector (7);
the charging connector further comprises a shield shell (8) disposed in the housing (3), and at least one of the cables runs through the shield shell (8);
the shield shell (8) comprises a first port (801) and a second port (802), the at least one of the cables runs through the shield shell (8) through the first port (801) and the second port (802), the first port (801) is sealingly joined with the charging socket body (1), and the second port (802) is sealingly joined with the cable running through the shield shell (8); **characterized in that**
the multiple cables comprise a charging wire (4) and a data wire (5), the charging wire (4) and the data wire (5) run through the shield shell (8), and the charging wire (4) and the data wire (5) are sealingly joined with the second port (802) by an insulator (9);
the multiple cables comprise a ground wire (6), and the ground wire (6) is located outside the shield shell (8).

2. The charging connector according to claim 1, wherein the terminal connector (7) comprises a connecting head (701) and a connecting rod (702) that are connected to each other, the connecting rod (702) is welded or crimped to a conductor of the cable, and the connecting head (701) is threadedly connected to the terminal (2).

3. The charging connector according to claim 1, wherein the charging socket body (1) is perpendicular to the housing (3), and the terminal (2) is perpendicular to a front end of the cable.

4. The charging connector according to claim 1, wherein the cables are provided with a shield mesh, and the shield mesh is electrically connected to the shield shell (8).

5. The charging connector according to claim 1, wherein the housing (3) has a first end and a second end that are opposite each other, the first end of the housing (3) is connected to the charging socket body (1), the second end of the housing (3) is connected to an end cover (10), the end cover (10) and the housing (3) are sealed using a sealing pad (11), the insulator (9) runs through the sealing pad (11) and the end cover (10) and is sealingly joined with the sealing pad (11), and the ground wire (6) runs through the sealing pad (11) and the end cover (10) and is sealingly joined with the sealing pad (11).

6. The charging connector according to claim 1, wherein the charging socket body (1) is detachably connected to the housing (3).

7. The charging connector according to claim 6, wherein the charging connector further comprises a snap ring (12), the snap ring (12) has two opposite ends, the two ends of the snap ring (12) are both rotatably connected to the charging socket body (1), an outer wall of the housing (3) is provided with a snap block (13), and the snap ring (12) is rotated to be tightly snap-fitted with or separated from the snap block (13).

## Patentansprüche

1. Ladestecker, umfassend:
einen Ladebuchsenkörper (1);
mehrere Anschlüsse (2), die in dem Ladebuchsenkörper (1) angeordnet sind;
ein hohles Gehäuse (3), das mit dem Ladebuchsenkörper (1) verbunden ist; und
mehrere Kabel, die in dem Gehäuse (3) verlaufen, wobei ein Endabschnitt jedes der Kabel durch einen Anschlussstecker (7) lösbar mit einem entsprechenden Anschluss (2) verbunden ist;
wobei der Ladestecker ferner einen Abschirmmantel (8) umfasst, der in dem Gehäuse (3) angeordnet ist, und zumindest eines der Kabel durch den Abschirmmantel (8) verläuft;
wobei der Abschirmmantel (8) einen ersten Port (801) und einen zweiten Port (802) umfasst, das zumindest eine der Kabel durch den Abschirmmantel (8) durch den ersten Port (801) und den zweiten Port (802) verläuft, der erste Port (801) abdichtend an den Ladebuchsenkörper (1) angeschlossen ist und der zweite Port (802) abdichtend an das durch den Abschirmmantel (8) verlaufende Kabel angeschlossen ist; **dadurch gekennzeichnet, dass** die mehreren Kabel eine Ladeleitung (4) und eine Datenleitung (5) umfassen, wobei die Ladeleitung (4) und die Datenleitung (5) durch den Abschirmmantel (8) verlaufen und die Ladeleitung (4) und die Datenleitung (5) abdichtend an den zweiten Port (802) durch einen Isolator (9) angeschlossen sind;
die mehreren Kabel eine Erdungsleitung (6) umfassen und sich die Erdungsleitung (6) außerhalb des Abschirmmantels (8) befindet.

2. Ladestecker gemäß Anspruch 1, wobei der Anschlussstecker (7) einen Verbindungskopf (701) und einen Verbindungsstab (702) umfasst, die miteinander verbunden sind, wobei die Verbindungsstange (702) mit einem Leiter des Kabels verschweißt oder gecrimpt ist und der Verbindungskopf (701) mit dem Anschluss (2) gewindemäßig verbunden ist.

3. Ladestecker gemäß Anspruch 1, wobei der Ladebuchsenkörper (1) senkrecht zu dem Gehäuse (3) ist und der Anschluss (2) senkrecht zu einem vorderen Ende des Kabels ist.

4. Ladestecker gemäß Anspruch 1, wobei die Kabel mit einem Abschirmgeflecht bereitgestellt sind und das Abschirmgeflecht elektrisch mit dem Abschirmmantel (8) verbunden ist.

5. Ladestecker gemäß Anspruch 1, wobei das Gehäuse (3) ein erstes Ende und ein zweites Ende aufweist, die einander gegenüberliegen, wobei das erste Ende des Gehäuses (3) mit dem Ladebuchsenkörper (1) verbunden ist, das zweite Ende des Gehäuses (3) mit einer Endabdeckung (10) verbunden ist, die Endabdeckung (10) und das Gehäuse (3) unter Verwendung eines Dichtkissens (11) abgedichtet sind, der Isolator (9) durch das Dichtkissen (11) und die Endabdeckung (10) verläuft und abdichtend an das Dichtkissen (11) angeschlossen ist und die Erdungsleitung (6) durch das Dichtkissen (11) und die Endabdeckung (10) verläuft und abdichtend an das Dichtkissen (11) angeschlossen ist.

6. Ladestecker gemäß Anspruch 1, wobei der Ladebuchsenkörper (1) lösbar mit dem Gehäuse (3) verbunden ist.

7. Ladestecker gemäß Anspruch 6, wobei der Ladestecker ferner einen Sprengring (12) umfasst, wobei der Sprengring (12) zwei gegenüberliegende Enden aufweist, wobei die beiden Enden des Sprengrings (12) beide drehbar mit dem Ladebuchsenkörper (1) verbunden sind, wobei eine Außenwand des Gehäuses (3) mit einem Sprengblock (13) bereitgestellt ist, und wobei der Sprengring (12) gedreht wird, um fest mit dem Sprengblock (13) verrastet oder davon getrennt zu werden.

## Revendications

1. Connecteur de charge, comprenant :
un corps de prise de charge (1) ;
une pluralité de bornes (2) disposées dans le corps de prise de charge (1) ;
un boîtier creux (3) connecté au corps de prise de charge (1) ; et
une pluralité de câbles s'étendant dans le boîtier (3), une partie d'extrémité de chacun des câbles est connectée de manière amovible à une borne correspondante (2) par un connecteur de borne (7) ;
le connecteur de charge comprend en outre une coque de blindage (8) disposée dans le boîtier (3), et au moins un des câbles traverse la coque de blindage (8) ;
la coque de blindage (8) comprend un premier port (801) et un second port (802), l'au moins un des câbles traverse la coque de blindage (8) à travers le premier port (801) et le second port (802), le premier port (801) est joint de manière étanche au corps de prise de charge (1), et le second port (802) est joint de manière étanche au câble traversant la coque de blindage (8) ;
**caractérisé en ce que** la pluralité de câbles comprennent un fil de charge (4) et un fil de données (5), le fil de charge (4) et le fil de données (5) traversent la coque de blindage (8), et le fil de charge (4) et le fil de données (5) sont joints de manière étanche au second port (802) par un isolant (9) ;
la pluralité de câbles comprennent un fil de masse (6), et le fil de masse (6) est situé à l'extérieur de la coque de blindage (8).

2. Connecteur de charge selon la revendication 1, dans lequel le connecteur de borne (7) comprend une tête de connexion (701) et une tige de connexion (702) qui sont connectées l'une à l'autre, la tige de connexion (702) est soudée ou sertie à un conducteur du câble, et la tête de connexion (701) est connectée par filetage à la borne (2).

3. Connecteur de charge selon la revendication 1, dans lequel le corps de prise de charge (1) est perpendiculaire au boîtier (3), et la borne (2) est perpendiculaire à une extrémité avant du câble.

4. Connecteur de charge selon la revendication 1, dans lequel les câbles sont munis d'un maillage de blindage, et le maillage de blindage est électriquement connecté à la coque de blindage (8).

5. Connecteur de charge selon la revendication 1, dans lequel le boîtier (3) comporte une première extrémité et une seconde extrémité qui sont opposées l'une à l'autre, la première extrémité du boîtier (3) est jointe au corps de prise de charge (1), la seconde extrémité du boîtier (3) est jointe à un couvercle d'extrémité (10), le couvercle d'extrémité (10) et le boîtier (3) sont scellés à l'aide d'un patin d'étanchéité (11), l'isolant (9) traverse le patin d'étanchéité (11) et le couvercle d'extrémité (10) et est joint de manière étanche au patin d'étanchéité (11), et le fil de masse (6) traverse le patin d'étanchéité (11) et le couvercle d'extrémité (10) et est joint de manière étanche au patin d'étanchéité (11).

6. Connecteur de charge selon la revendication 1, dans lequel le corps de prise de charge (1) est connecté de manière amovible au boîtier (3).

7. Connecteur de charge selon la revendication 6, dans lequel le connecteur de charge comprend en outre une bague d'arrêt (12), la bague d'arrêt (12) comporte deux extrémités opposées, les deux extrémités de la bague d'arrêt (12) sont toutes deux connectées de manière rotative au corps de prise de charge (1), une paroi extérieure du boîtier (3) est pourvue d'un bloc d'arrêt (13), et la bague d'arrêt (12) est tournée pour être ajustée par encliquetage de manière étanche avec ou séparée du bloc d'arrêt (13).
